# EUROPEAN PATENT SPECIFICATION

(11) **EP 0 773 712 B1**
(45) Date of publication and mention of the grant of the patent: **27.10.1999**
(21) Application number: 95925163.8
(22) Date of filing: 18.07.1995
(51) Int. Cl.: A01G 31/00

(54) **SUBSTRATE BLOCK FOR CULTIVATING A PERENNIAL CROP**
ZUCHTBLOCK FÜR DIE KULTUR VON MEHRJÄHRIGEM GEWÄCHS
BLOC FORMANT SUBSTRAT POUR CULTIVER DES PLANTES VIVACES

(30) Priority: 05.08.1994 NL 9401275
(43) Date of publication of application: 21.05.1997
(73) Proprietor: Rockwool/ Grodan B.V., NL-6074 NH Melick-Herkenbosch (NL)
(72) Inventor: VERGELDT, Marcus Arthur Robert Carolus, NL-5674 PZ Gerwen (NL)
(74) Representative: Prins, Hendrik Willem
(86) International application number: NL9500252
(87) International publication number: WO9603858

(56) References cited:
- EP-A- 0 414 330
- NL-A- 9 200 978

## Description

In the cultivation of perennial plants such as roses over a time period of 2-7 years on a synthetic substrate, fast and high-growing weeds are a constantly occurring problem. Since weeds grow faster than the plant, the weeds must be controlled. This once-only or more frequent weeding entails relatively high costs. Because nutrient solution is usually held in a closed circuit in substrate culture the use of herbicides is impossible.

The present invention has for its object to provide a substrate block wherein removal of weeds is avoided as far as possible, while the use of herbicides can be dispensed with.

The present invention is based on the insight that particularly the upper surface must be of a nature such that the growth of weed is avoided while the culture of the crop in the layer located thereunder must be able to take place without hindrance.

From NL-A- 920 0978 a substrate block for cultivating perennial plants such as roses is known, comprising a block of mineral wool which is provided on its standing surfaces and on its upper surface with a vegetation-avoiding layer.

The present invention proposes that said vegetation-avoiding layer is fixedly connected to at least said upper surface.

According to a first embodiment the vegetation-avoiding layer consists of a non-rootable layer. It is thus impossible for weed to germinate in this non-rootable layer and to penetrate for the necessary growth into the culture part of the substrate block located thereunder. A large number of different materials can be used as non-rootable layer. High-density mineral wool can for instance be used, that is, a mineral wool having a high density compared to the remaining part of the substrate block, for example from 150 kg/m³, but preferably from 200 kg/m³ and higher. Another example consists of a layer of plastic, in particular a layer of plastic foil, such as polyethylene and polypropylene foil which are non-transparent and preferably light-reflecting.

According to a second embodiment the vegetation-inhibiting layer consists of a non-water-retaining layer. In this embodiment the conditions in the vegetation-inhibiting layer are of a nature such that vegetation development and growth is impossible, mainly as a consequence of the too low humidity. Examples of a non-water-retaining layer are mineral wools with a low density, that is, a density which is much lower than the remaining part of the substrate block, such as densities up to 40 kg/m³, for example 5-20 kg/m³. At such low densities, as a result of the prevailing suction pressure, all the water would be drawn out of the non-water-retaining layer to the remaining part of the substrate block. Another example is formed by a so-called dry weave layer as applied as skin contact layer in sanitary products such as diapers. Such dry weave layers are porous but only water-permeable in one direction.

The non-water-retaining layer usually has a thickness of 2-5 mm.

A third embodiment of the vegetation-inhibiting layer is formed by a hydrophobic mineral wool, that is, a mineral wool which does not retain water and/or is water-impermeable. This means that when water is supplied it flows off this layer immediately and does not pass through this layer, again conditions wherein vegetation growth is not possible.

In all these embodiments the vegetation-inhibiting layer is fixedly connected to the block.

For an optimum culture of the perennial crop in the substrate block according to the invention it is further recommmended that the vegetation-inhibiting layer is provided with a plant hole through which the plant is guided into the remaining part of the substrate block, in which culture of the plant is substantially optimal.

In order to ensure an optimal supply of water and nutrients, certainly in the case that the nature of the vegetation-inhibiting layer makes passage of water substantially impossible, the vegetation-inhibiting layer is provided with a water supply hole to the part of the substrate block located thereunder.

Mentioned and other features of the substrate block according to the invention will be further elucidated hereinbelow on the basis of a number of embodiments which are only given by way of example and to which reference is made in the annexed drawing.

In the drawing:

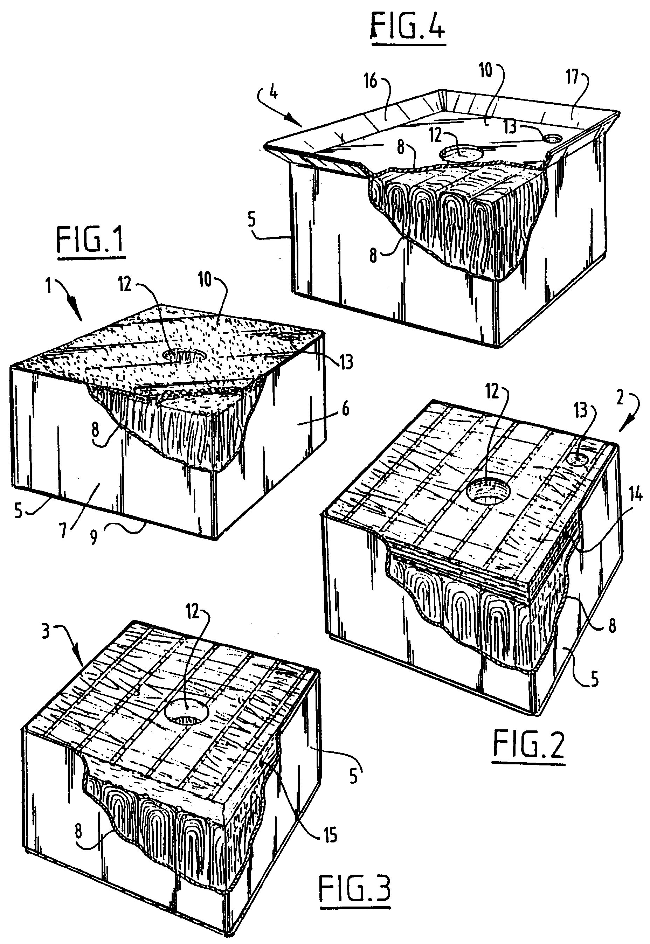

Figures 1-4 each show a perspective, partly broken away view of a substrate block according to the invention.

Figures 1-4 show substrate blocks according to the invention which have generally standard dimensions (10 x 10 x 6.5 cm). The bottom surface of the substrate blocks 1-4 can moreover be provided with grooves which improve drainage and/or enhance air pruning.

The substrate block 1 of figure 1 consists of a block 5 of mineral wool with a density of 30-90 kg/m³. The standing surfaces 6 and 7 are encased in a white plastic foil (for instance polyethylene foil). The bottom surface is open and can be placed on a so-called grow-slab.

The upper surface 10 is provided with a non-rootable layer 11 such as a layer of hot-melt or a layer of plastic (plasticoat (A GD 341)). Such a layer 11 can be applied from a liquid state onto an upper surface 10 and subsequently cured. Provided in the non-rootable layer 11 is a plant hole 12 for the perennial plant for cultivating therein and a water supply hole 13 to the block of mineral wool located thereunder. This block can consist of rockwool, glass wool, slag wool, wherein the wool fibres are mutually connected by cured binder and the fibres can optionally be provided with a wetting agent.

Figure 2 shows a substrate block 2 according to the invention wherein the block 5 of mineral wool is again encased on its standing surfaces with a foil 8.

The upper surface 10 is provided in this case with a layer of high-density mineral wool 14. The layer 14 of high-density mineral wool can be formed during the production process by selectively compressing a part of the product, for instance by impacting, whereby the layer 14 acquires a high density (greater than 200 kg/m³), while the underlying block 5 which is closely joined thereto has a density of 30-90 kg/m³. This non-rootable layer 14 is also provided with a plant hole 12 and optionally a water supply hole 13 along which water can be added to block 5 using known drippers.

Figure 3 shows a substrate block 3 according to the invention wherein block 5 is again encased on its standing surfaces with a foil 8. The vegetation-avoiding layer now consists of a layer 15 of low-density mineral wool with a density of only 10 kg/m³. Such a mineral wool layer retains water very poorly, while the suction pressure prevailing therein is so low that all the water is drawn off directly to the block 5 located thereunder, for instance just due to the prevailing hydrostatic suction force. Layer 15 is provided with a plant hole. A supply hole 13 for water can be omitted since water penetrates directly through layer 15 into block 5.

Figure 4 shows another substrate block 4 according to the invention wherein the block 5 is not only encased with foil 8 on its standing surfaces but is also encased with foil 8 on its upper surface 10. This foil is provided with a plant hole 12 and a water supply hole 13. On the top the foil is closed by welding along the weld seams 16 and 17.

It will be apparent that with the substrate blocks described in figures 1-4 not only does the upper surface have to be provided with the typical vegetation-inhibiting layer according to the invention but that the standing surfaces are also provided with a hot-melt, a plastic layer or high/low-density mineral wool. Such layers can be arranged during the production process by immersion, adhesion, spraying and the like.

## Claims

1. Substrate block for cultivating perennial plants such as roses, comprising a block of mineral wool which is provided on its standing surfaces and on its upper surface with a vegetation-avoiding layer, characterized in that said vegetation-avoiding layer is fixedly connected to at least said upper surface.

2. Substrate block as claimed in claim 1, wherein the vegetation-avoiding layer is a non-rootable layer.

3. Substrate block as claimed in claim 2, wherein the non-rootable layer is formed from high-density mineral wool.

4. Substrate block as claimed in claim 1, wherein the vegetation-avoiding layer is a non-water-retaining layer.

5. Substrate block as claimed in claim 4, wherein the non-water-retaining layer is formed from low density mineral wool, dry weave and the like.

6. Substrate block as claimed in claim 1, wherein the vegetation-avoiding layer is formed from hydrophobic mineral wool.

7. Substrate block as claimed in claim 1, wherein said fixedly connected vegetation-avoiding layer is applied in liquid state and is subsequently solidified.

8. Substrate block as claimed in claim 1, wherein the vegetation-avoiding layer is a layer of plastic and the like.

9. Substrate block as claimed in claim 7, wherein the vegetation-avoiding layer comprises hot melt and/or plastic coat.

10. Substrate block as claimed in claim 4 or 5, wherein the non-water-retaining layer has a thickness of 2-5 mm.

11. Substrate block as claimed in claims 1-7, wherein the vegetation-avoiding layer is provided with a plant hole, and preferably with a water supply hole.

## Patentansprüche

1. Substratblock zum Kultivieren mehrjähriger Pflanzen wie Rosen mit einem Block aus Mineralwolle, der auf seinen Standflächen und auf seiner oberen Fläche mit einer Vegetationsverhinderungsschicht versehen ist,
**dadurch gekennzeichnet,** daß
die Vegetationsverhinderungsschicht mit zumindest der oberen Oberfläche fixiert verbunden ist.

2. Substratblock nach Anspruch 1, wobei die Vegetations-verhinderungsschicht eine nicht verwurzelbare Schicht ist.

3. Substrat nach Anspruch 2, wobei die nicht verwurzelbare Schicht aus hochdichter Mineralwolle gebildet ist.

4. Substratblock nach Anspruch 1, wobei die Vegetations-verhinderungsschicht eine nicht wasserhaltende Schicht ist.

5. Substratblock nach Anspruch 4, wobei die nicht wasserhaltende Schicht aus Mineralwolle geringer Dichte, Trockengewebe und dergl. gebildet ist.

6. Substratblock nach Anspruch 1, wobei die Vegetations-verhinderungsschicht aus hydrophober Mineralwolle gebildet ist.

7. Substratblock nach Anspruch 1, wobei die fixiert verbundene Vegetationsverhinderungsschicht in einem flüssigen Zustand angewendet und anschließend vefestigt wird.

8. Substratblock nach Anspruch 1, wobei die Vegetations-verhinderungsschicht eine Schicht aus Kunstsstoff und dergl. ist.

9. Substratblock nach Anspruch 7, wobei die Vegetations-verhinderungsschicht heiße Schmelze und/oder Kunststoffbeschichtung aufweist.

10. Substratblock nach Anspruch 4 oder 5, wobei die nicht wasserhaltende Schicht eine Dicke von 2-5 mm aufweist.

11. Substratblock nach Anpruch 1-7, wobei die Vegetations-verhinderungssschicht mit einem Pflanzenloch und vorzugsweise mit einem Wasserzufuhrloch versehen ist.

## Revendications

1. Bloc de substrat pour cultiver des plantes vivaces telles que des roses, comprenant un bloc de laine minérale qui est muni sur ses surfaces ascendantes et sa surface supérieure d'une couche anti-végétation, caractérisé en ce que ladite couche anti-végétation est reliée de manière fixe à au moins ladite surface supérieure.

2. Bloc selon la revendication 1, dans lequel la couche anti-végétation est une couche dans laquelle une plante ne peut pas s'enraciner.

3. Bloc selon la revendication 2, dans lequel la couche dans laquelle une plante ne peut pas s'enraciner est formée à partir de laine minérale haute densité.

4. Bloc selon la revendication 1, dans lequel la couche anti-végétation est une couche ne retenant pas l'eau.

5. Bloc selon la revendication 4, dans lequel la couche ne retenant pas l'eau est formée à partir de laine minérale basse densité, un tissage sec ou analogue.

6. Bloc selon la revendication 1, dans lequel la couche anti-végétation est formée à partir de laine minérale hydrophobe.

7. Bloc selon la revendication 1, dans lequel ladite couche anti-végétation reliée de manière fixe est appliquée à l'état liquide et ensuite solidifiée.

8. Bloc selon la revendication 1, dans lequel la couche anti-végétation est une couche de matière plastique ou analogue.

9. Bloc selon la revendication 7, dans lequel la couche anti-végétation comprend un revêtement de matière plastique et/ou thermofusible.

10. Bloc selon la revendication 4 ou 5, dans lequel la couche ne retenant pas l'eau a une épaisseur comprise entre 2 et 5 mm.

11. Bloc selon l'une quelconque des revendications 1 à 7, dans lequel la couche anti-végétation est munie d'un orifice pour plante, et de préférence d'un orifice d'alimentation en eau.
